Europäisches Patentamt

European Patent Office

Office européen des brevets

(11) Publication number: **0 096 886**
**A1**

## (12) EUROPEAN PATENT APPLICATION

(21) Application number: 83105813.6

(22) Date of filing: 14.06.83

(51) Int. Cl.³: **G 08 B 25/02, H 04 M 11/04**

(30) Priority: 16.06.82 JP 101995/82

(43) Date of publication of application: 28.12.83
Bulletin 83/52

(84) Designated Contracting States: DE FR GB

(71) Applicant: **Wagner Shokai Inc., 14-4,
Yanagibashi 2-chome, Taito-ku Tokyo (JP)**

(72) Inventor: **Kojima, Minoru, 22-7, Misono-cho
Tatebayashi-shi, Gunma-ken (JP)**

(74) Representative: **Riederer Freiherr von Paar zu Schönau,
Anton et al, Freyung 615 Postfach 2664, D-8300 Landshut
(DE)**

(54) Alarm system.

(57) An alarm system associated with emergency detectors
has a memory (22) for storing a telephone number and a
aural information recording device (16). When the emer-
gency detector is activated the stored telephone number is
read out and delivered into corresponding telephone lines
as call signals. The aural information recording device delivers the aural information through the telephone lines
specified by the call signals.

**PATENTANWÄLTE**

Dipl.-Ing. Anton Freiherr 0096886

**Riederer von Paar**

D-8300 Landshut
Postfach 2664, Freyung 615
☎ Landshut (0871) 22170
Fax (CCITT 2) 2 min, manuell
Telex 58441 glala d

Frhr. Riederer v. Paar, Postfach 2664, D-8300 Landshut

Wagner Shokai Inc.
14-4, Yanagibashi 2-chome

Taito-ku, Tokyo, Japan


EP 83 105 813.6

Partner in München:

**DIEHL & KRESSIN**
Dr. H. O. Diehl, Dr. H-R. Kressin
☎ München (089) 177061
Fax (089) 177461 (autom.)
Telex 5215145 Zeus d
Ihre
Your  Ref:
Unsere
Our  Ref:

## ALARM SYSTEM

## BACKGROUND OF THE INVENTION

The present invention relates to an alarm system associated with emergency detectors, such as a smoke detector and a heat detector, and connected to telephone lines.

Conventional alarm systems are adapted to give an alarm, as by ringing a bell, to persons nearby when an emergency detector such as a smoke detector or a heat detector has operated.

However, such conventional alarm systems are useless when there are no persons nearby who perceive the alarm. For instance, when there are no persons at night in a building in which one of the conventional alarm systems is installed, nobody will make a response to the operation of the system and therefore it may be impossible to prevent a serious accident by taking a proper step at the initial stage of the emergency.

## SUMMARY OF THE INVENTION

Accordingly the present invention consists in an alarm system associated with emergency detectors, and has a memory for storing telephone numbers and an aural information recording device. The memory stores telephone numbers corresponding to telephone lines through which aural information is sent when an emergency detector is activated. When the emergency detector is activated, a telephone number stored in the memory is read out and delivered into corresponding telephone lines as call signals. The aural information recording device records the aural information to be sent when the emergency detector is activated. When the emergency detector is activated, the aural information recording device delivers the aural information through the telephone lines specified by the call signals.

It is an object of the invention to provide an alarm system which can automatically send aural information to a telephone connected to predetermined telephone lines when an emergency detector has operated.

It is another object of the invention to provide an alarm system which can dial a predetermined telephone number when an emergency detector has operated, and send aural information when the telephone has been answered, said aural information being that the emergency detector has operated.

It is a further object of the invention to provide an alarm system which can dial a plurality of predetermined telephone numbers in regular sequence when an emergency detector has operated, and send aural information each time the telephone is answered, the aural information being that the emergency detector has operated.

It is still another object of the invention to provide an alarm system which, when at least one of emergency detectors of different kinds has operated, dials a predetermined telephone number assigned to the emergency detector, and sends aural information when the telephone has been answered, the aural information being that said emergency detector has operated.

It is still a further object of the invention to provide an alarm system which, when at least one of emergency detectors of different kinds has operated, dials in regular sequence a plurality of predetermined telephone numbers assigned to the emergency detector and sends aural information each time the telephone is answered, the aural information being that the emergency detector has operated.

Other and further objects, features and advantages of the invention will appear more fully from the following description of specific embodiments when read in connection with the accompanying drawing.


## BRIEF DESCRIPTION OF THE DRAWINGS


Fig. 1 is a perspective upper front view illustrating an alarm system according to a preferred embodiment of the invention.

Fig. 2 is a perspective rear view illustrating the alarm system of Fig. 1.

Fig. 3 is an enlarged front view showing a keyboard of the alarm system of Fig. 1.

Fig. 4 is a block diagram showing electric components of the alarm system of the invention.

Fig. 5a to 5e are flow charts showing procedures for storing telephone numbers in the alarm systems.

Fig. 6 is a flow chart showing procedures for recording aural information in said alarm system.

Fig. 7 is a flow chart showing procedures for reproducing aural information in said alarm system.

Fig. 8a to 8d are flow charts showing the operation of said alarm system.


## DETAILED DESCRIPTION OF THE PREFERRED EMBODIMENTS


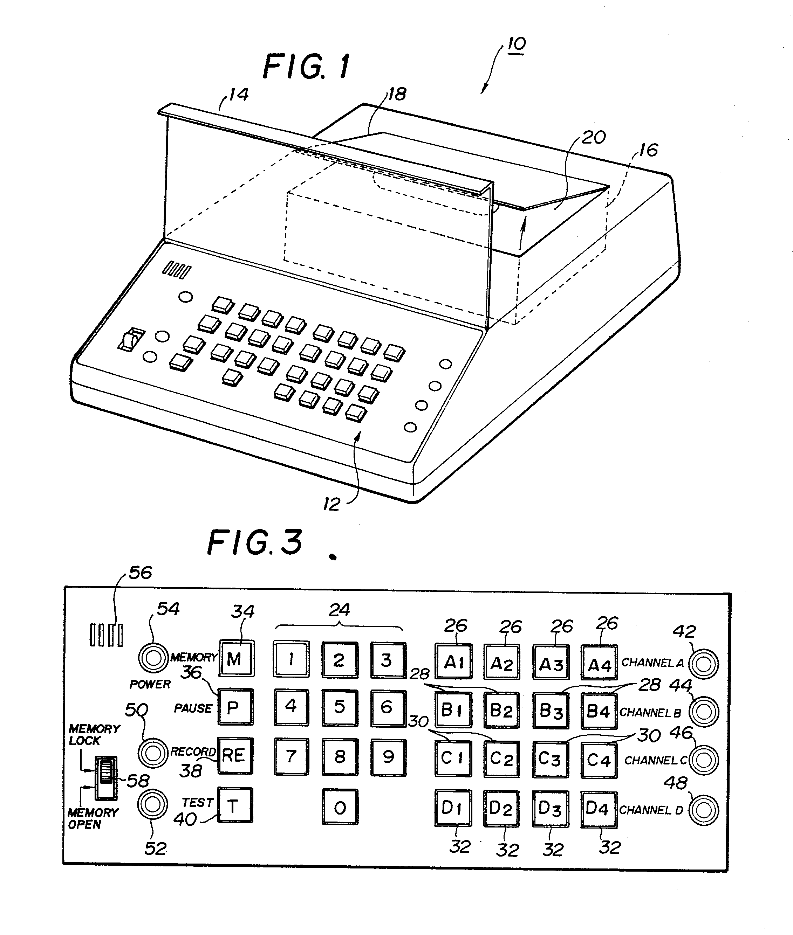

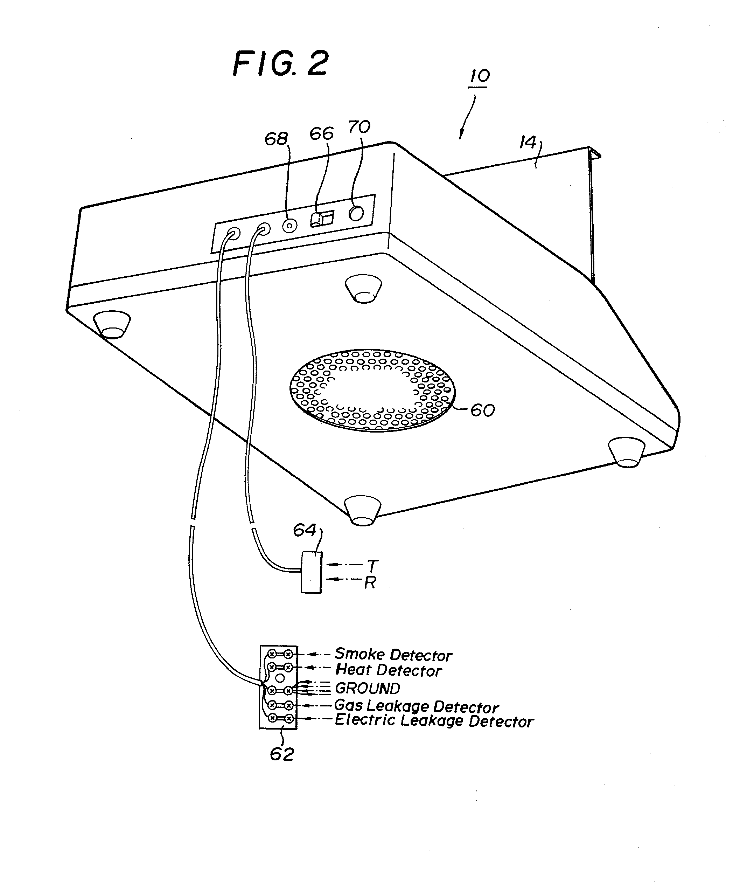

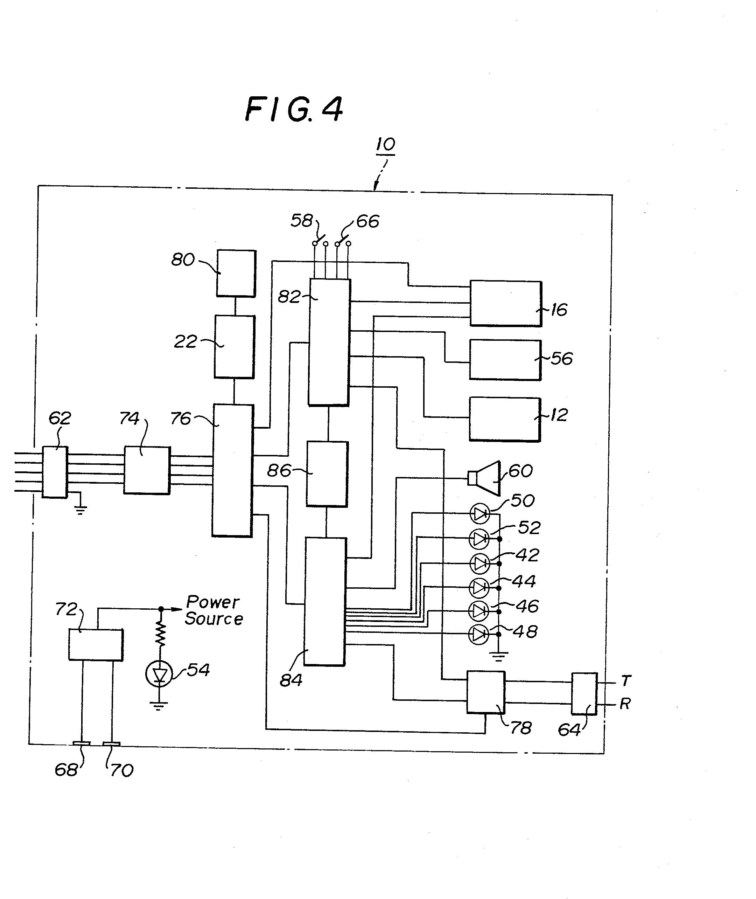

Referring to the attached drawings, an alarm system 10 according to a preferred embodiment of the present invention is shown from different angles in Figs. 1 and 2. The alarm system 10 comprises a keyboard 12 having an openable front cover 14 which is preferably made of a transparent or semitransparent material. A tape recording and playing device 16 has a top cover 18 adapted to open and close so that a magnetic tape (e.g. a tape cassette 20) can be put into and removed from the device 16, and a memory 22 which will be described later with reference to Fig. 4. If desired aural information is recorded in the cassette magnetic tape 20 in advance, the tape recording and playing device 16 may be replayed by a suitable, simple tape playing device which has only a playing function and does not have a recording function. Also, it is possible to dispense with the cassette magnetic tape 20 and use a suitable speech synthesizing device adapted to deliver the desired aural information.

As shown in Fig. 3, the keyboard 12 has ten keys 24 respectively bearing numerals "0" to "9" by means of which keys telephone numbers inputted, telephone number memory keys 26 with symbols "$A_1$", "$A_2$", "$A_3$" and "$A_4$" for storing in the memory 22 four different telephone numbers for a channel A, telephone number memory keys 28 with symbols "$B_1$", "$B_2$", "$B_3$" and "$B_4$" for storing in the memory 22 four different telephone numbers for a channel B, telephone number memory keys 30 with symbols "$C_1$", "$C_2$", "$C_3$" and "$C_4$" for storing in the memory 22 four different telephone numbers for a channel C, telephone number memory keys 32 with symbols "$D_1$", "$D_2$", "$D_3$" and "$D_4$" for storing in the memory 22 four different telephone numbers for a channel D, a memory key 34 marked with the letter "M", a pause key 36 bearing the letter "P", a record key 38 with letters "RE" for letting the tape recording and playing device 16 perform a recording operation, and a test key 40 with the letter "T" for letting the tape recording and playing device 16 perform a playing operation. The number of channels may be changed freely. Also, the number of telephone numbers stored in the memory 22 for each channel may be changed freely.

Further provided on the panel of the keyboard 12 are channel indicators 42, 44, 46 and 48 corresponding to the channels A, B, C and D, said channel indicator 42, 44, 46 or 48 being turned on when the corresponding channel A, B, C or D is selected, a recording indicator 50 which is turned on when the tape recording and playing device 16 is performing a recording operation, a playing indicator 52 which is turned on when the tape recording and playing device 16 is performing a playing operation, and a power indicator 54 which is turned on when the alarm system 10 is energized. The panel of the keyboard 12 is also provided with a condenser microphone 56 and a switch 58 for selection between a "memory lock" position in which all the keys on the keyboard 12 are in enabled electric condition and a "memory open" position in which they are in disabled electric condition.

As shown in Fig. 2, the alarm system 10 is provided at its bottom with a speaker 60, and at its rear with a connector 62 for connection with suitable emergency detectors (not shown), a telephone connector 64 for connection with a pair of telephone lines T (tip) and R (ring), a switch 66 by means of which call signals for telephone numbers are selected between 20 pps (pulses per second) and 10 pps, a jack 68 for connection with a suitable AC adapter, and a jack 70 for connection with a suitable DC battery. The connector 62 connects the alarm system 10 with four different kinds of emergency detectors consisting, for instance, of a smoke detector, a heat detector, a gas leakage detector and an electric leakage detector. That is, the connector 62 has five connecting terminals consisting of four terminals for connecting each of the channels A, B, C and D of the alarm system 10 with the detecting signal output line of each emergency detector, and one terminal for connecting the grounding conductor of the alarm system 10 with the grounding conductor of each emergency detector. The connector 62 is provided with a suitable cover (not shown). The emergency detectors may also include an intruder detector or means for detecting any other abnormality. If the emergency detectors are designed to send detecting signals by radio, the alarm system 10 may be provided with a suitable receiver for receiving the radio detecting signals.

As shown in Fig. 4, the alarm system 10 is provided with a power circuit 72 for supplying electric circuits within the alarm system 10 with DC voltage (e.g. DC 12-volt) received through the AC adapter connected to the jack 68 or from the DC battery connected to the jack 70. The alarm system 10 is further provided with a receiver circuit 74 for receiving detecting signals from the emergency detectors connected by means of the connector 62 and adjusting the signals so as to suit them to subsequent processing within the alarm system 10, a CPU (central processing unit) 76 for judging which of the channels A, B, C and D the detecting signals received by the receiver circuit 74 belongs to (that is, which of the emergency detectors has sent the signal) and then processing the signal, and a control circuit 78 for adjusting output signals, prepared within the alarm system 10, into signals suitable for being delivered through the telephone lines T and R. The CPU 76 is connected with the memory 22 which, in turn, is connected with a backup power supply 80. The CPU 76 is also connected with an input interface 82 which is connected with the keyboard 12, tape recording and playing decive 16, condenser microphone 56, switches 58 and 66, and control circuit 78. The CPU 76 is further connected with an output interface 84 which is connected with the tape recording and playing device 16, indicators 42, 44, 46, 48, 50 and 52, speaker 60 and control circuit 78. Furthermore, the CPU 76 is directly connected with the tape recording and playing device 16 and control circuit 78, and is also connected through the input interface 82 and output interface 84 with a single amplifier 86. This amplifier 86 is a common one for both the microphone 56 and speaker 60.

To use the alarm system 10, it is necessary to make preparations as follows:

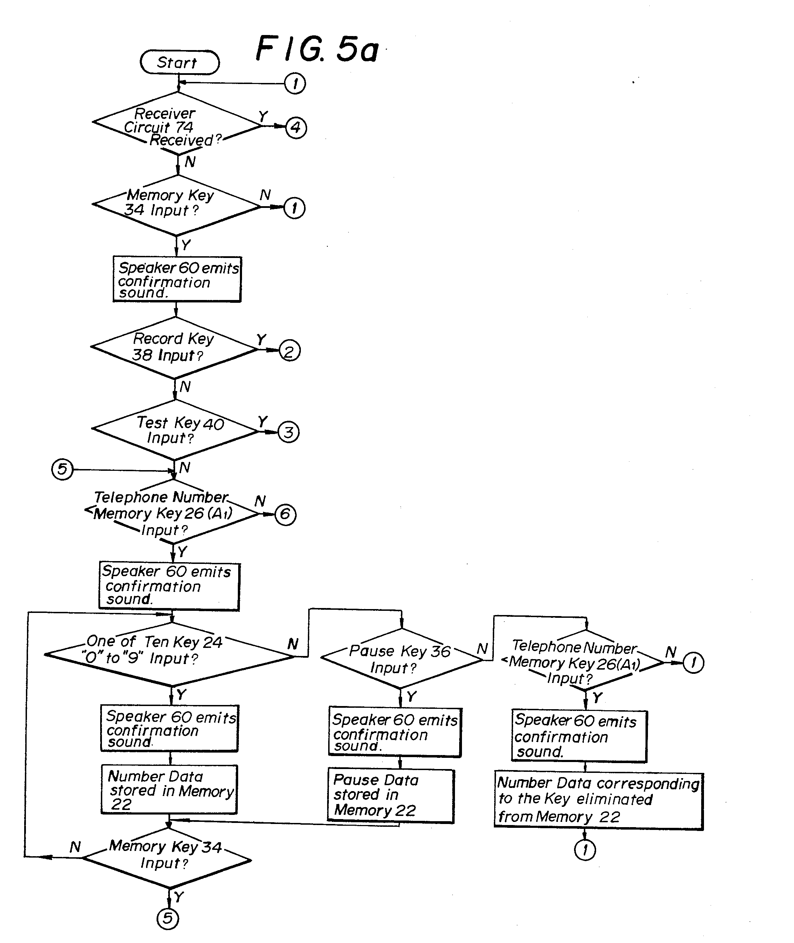

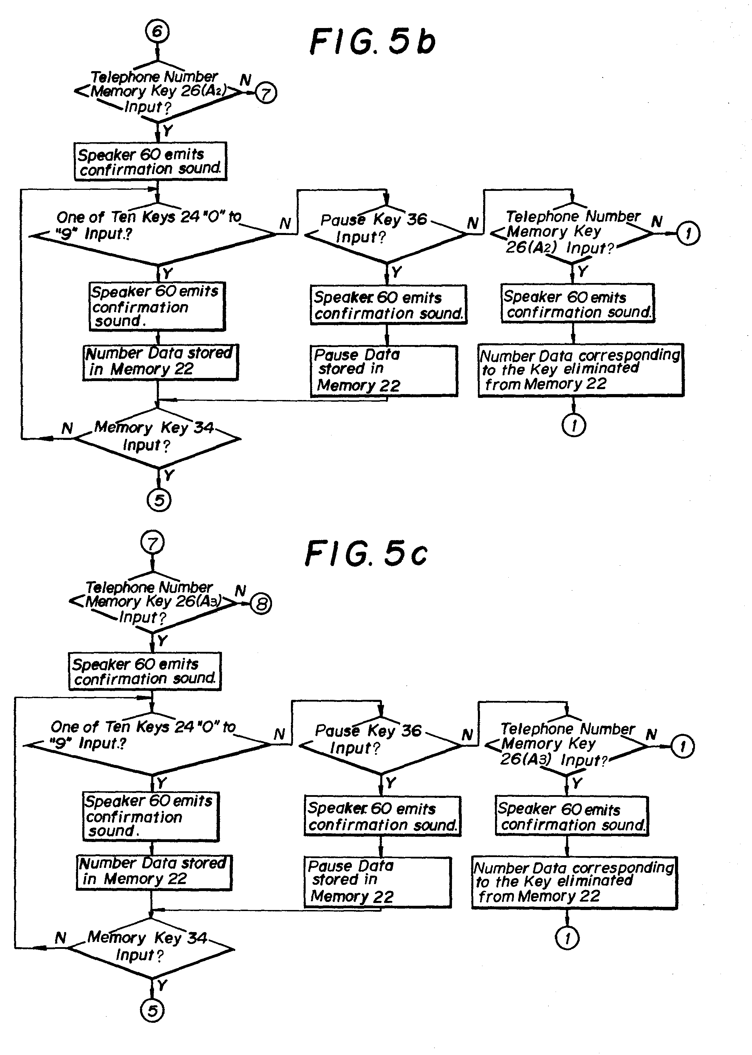

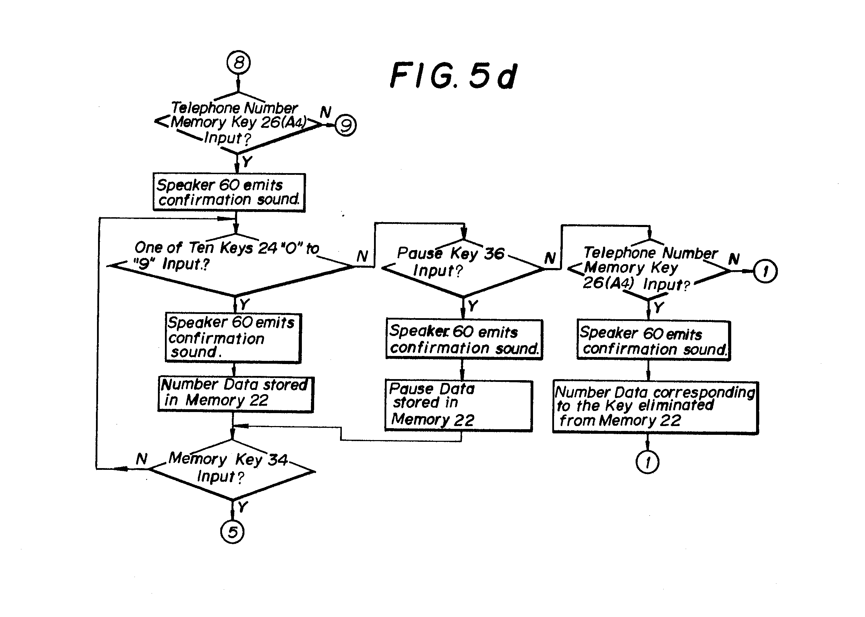

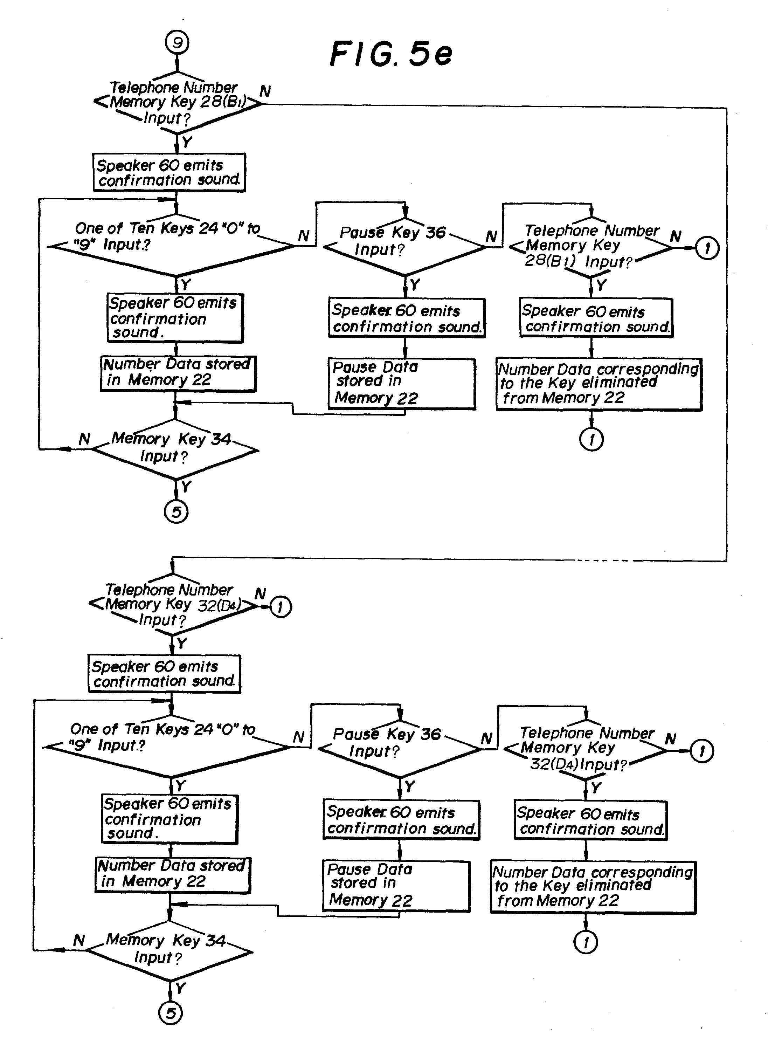

Telephone numbers are stored in the memory 22 as follows: First, the AC adapter is connected to the jack 68, or the DC battery is connected to the jack 70. Then, the power indicator 54 will be turned on, and DC voltage will be supplied to each electric circuit of the alarm system 10. The switch 58 is set on the "memory open" position in which all the keys on the keyboard 12 are in enabled electric condition. In this state, if the following procedures are taken, the CPU 76 will behave in accordance with a program to store telephone numbers in the memory 22 as shown in Fig. 5a to 5e. Flow charts for telephone number memory keys 28 ($B_1$) to ($B_4$), 30 ($C_1$) to ($C_4$) or 32 ($D_1$) to ($D_4$) are the same as the flow charts of Figs. 5a to 5d for telephone number memory keys 26 ($A_1$) to ($A_4$). Therefore, Fig. 5e shows procedures for the telephone number memory keys 28 ($B_1$) and 32 ($D_4$) only, and does not show procedures for the telephone number memory keys 28 ($B_2$) to ($B_4$), 30 ($C_1$) to ($C_4$) and 32 ($D_1$) to ($D_3$).

First, the memory key 34 is pushed. At this time, the speaker 60 will emit a sound for confirmation. Then, an address within the memory 22 is determined by pushing one of the telephone number memory keys 26 ($A_1$) to 26 ($A_4$), 28 ($B_1$) to 28 ($B_4$), 30 ($C_1$) to 30 ($C_4$) or 32 ($D_1$) to ($D_4$). At this time, the sound for confirmation is emitted again. Now a desired telephone number is inputted by means of the ten keys 24. The sound for confirmation will be emitted each time a key 24 is pushed. If, for example, a telephone exchange within an office needs "0" before the telephone number for connection with a city telephone, the key 24 for "0" and then the pause key 36 are pushed before the telephone number is inputted. After the teleophone number is inputted, the memory key 34 is pushed again. Now the inputted telephone number is stored in the address within the memory 22. Next, another one of the telephone number memory keys 26 ($A_1$) to 26 ($A_4$), 28 ($B_1$) to 28 ($B_4$), 30 ($C_1$) to 39 ($C_4$) and 32 ($D_1$) to 32 ($D_4$) is pushed, and another telephone number is inputted. In the same way, each of other desired telephone numbers is inputted for each of other telephone number memory keys. Thus, these telephone numbers are stored in their respective addresses within the memory 22.

Any telephone number stored in the memory 22 can be erased as follows: The memory key 34 is pushed, and then one telephone number memory key corresponding to the stored telephone number to be erased is pushed. Next, the same telephone number memory key is pushed without the keys 24 being pushed.

Aural information is recorded as follows: First, DC voltage is supplied to each electric circuit of the alarm system 10 and the switch 58 is pushed to the "memory open" position in the same way as in storing telepone numbers.

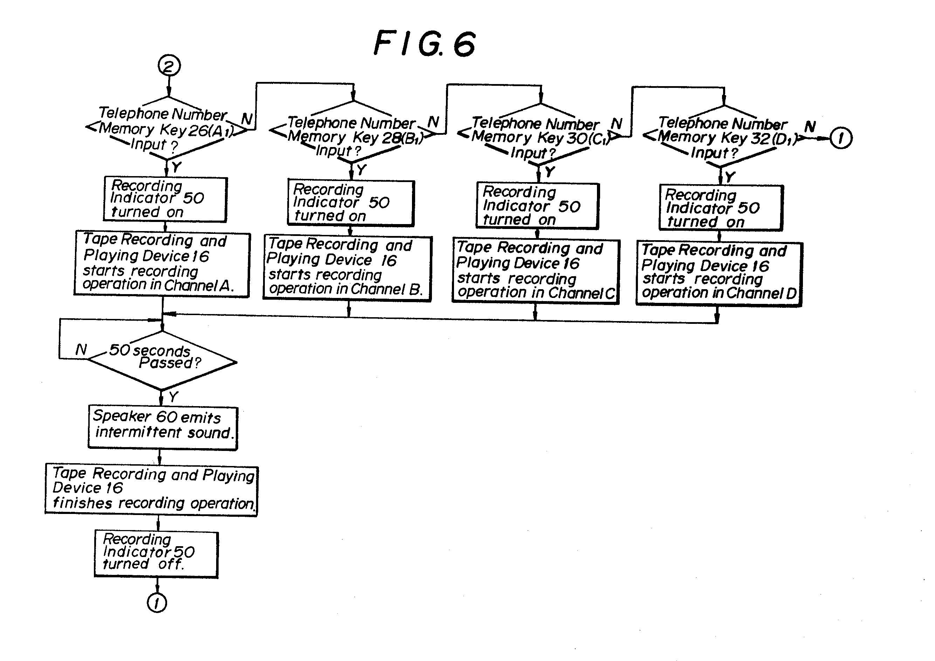

Then, the top cover 18 is opened and the cassette magnetic tape 20 is loaded into the tape recording and playing device 16. In this state, if the following procedures are taken, the CPU 76 will behave in accordance with a program to store the aural information in the cassette magnetic tape 20 as shown in Fig. 6. First, the memory key 34 is pushed. At this time, the speaker 60 will emit a sound for confirmation. The record key 34 is pushed. Then, a recording location within the cassette magnetic tape 20 corresponding to one of the channels A, B, C or D is determined by pushing one of the telephone number memory keys 26 ($A_1$), 28 ($B_1$), 30 ($C_1$) and 32 ($D_1$). Then, the recording indicator 50 and one of the channel indicators 42, 44, 46 and 48 corresponding to said recording location will be turned on, and the tape recording and playing device 16 will start the recording operation. If desired aural information is inputted through the microphone 56 at this time, the aural information will be recorded in the recording location on the cassette magnetic tape 20. In a certain period of the (about 50 seconds, for example), after the starting of the recording operation, the speaker 60 will emit an intermittent sound, the tape recording and playing device 16 finishing the recording operation and the recording indicator 50 being turned off. Next, the memory key 34, record key 38 and another one of the telephone number memory keys 26 ($A_1$), 28 ($B_1$), 39 ($C_1$) and 32 ($D_1$) are pushed in this order, and then the aural information is inputted. In the same way, desired aural information is inputted for each of the telephone number memory keys 26 ($A_1$), 28 ($B_1$), 30 ($C_1$) and 32 ($D_1$). Thus, each piece of such aural information is stored in its location within the cassette magnetic tape 20. The telephone number memory key 26 ($A_1$) actuates the tape recording and playing device 16 on behalf of the four keys 29 ($A_1$) to ($A_4$) in the channel A. The telephone number memory key 28 ($B_1$) actuates the tape recording and playing device 16 on behalf of the four keys 28 ($B_1$) to ($B_4$) in the channel B. The telephone number memory key 30 ($C_1$) actuates the tape recording and playing device 16 on behalf of the four keys 30

$(C_1)$ to $(C_4)$ in the channel C. The telephone number memory key 32 $(D_1)$ actuates the tape recording and playing device 16 on behalf of the four keys 32 $(D_1)$ to $(D_4)$ in the channel D. The cassette magnetic tape 20 is preferably an endless tape having four tracks corresponding to the channels A, B, C and D, but it is not resticted thereto.

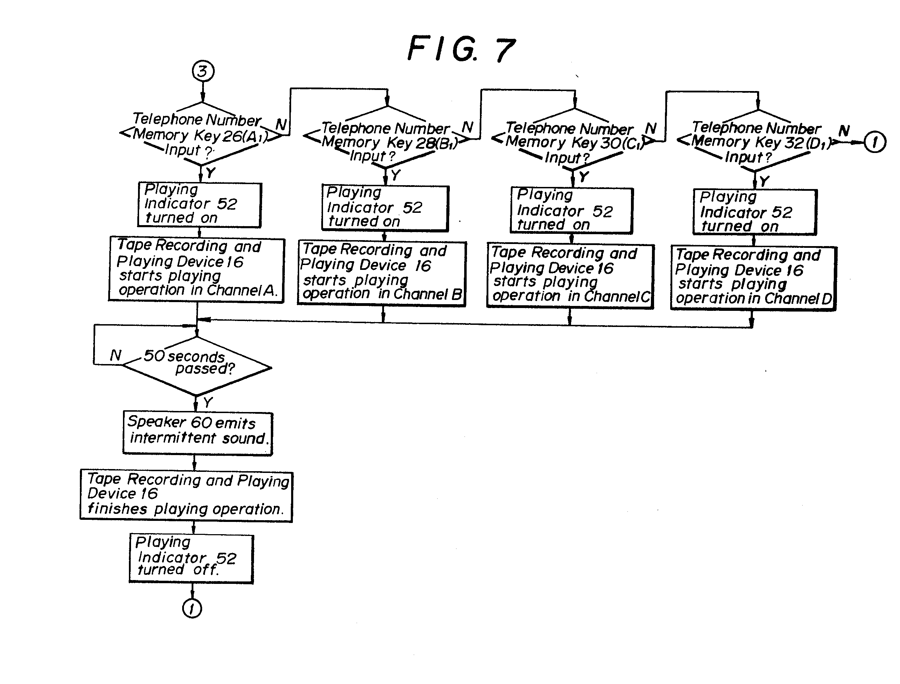

The aural information recorded in the cassette magnetic tape 20 can be reproduced for confirmation, as follows: The memory key 34 and then the test key 40 are pushed. Next, one of the telephone number memory keys 26 $(A_1)$, 28 $(B_1)$, 30 $(C_1)$ and 32 $(D_1)$ corresponding to the location of the cassette magnetic tape 20 to be played, that is, one of the keys corresponding to the channel to be tested, is pushed (see Fig. 7.). Then, the playing indicator 52 will be turned on, and the tape recording and playing device 16 will start the playing operation so that the aural information recorded in the channel is reproduced through the speaker 60. In a certain period of time (preferably about 50 seconds, but not being restricted thereto inasmuch the aural information recorded in the channel can be reproduced to its end) after the starting of the playing operation, the speaker 60 will emit an intermittent sound, the tape recording and playing device 16 finishing the playing operation and the playing indicator 52 being turned off.

In addition to the storing of the telephone numbers and the recording of the aural information, it is further necessary to make the following preparations: By means of the connector 62, the detecting signal output line of each of the smoke detector, heat detector, gas leakage detector and electric leakage detector is connected with each of the channels A, B, C and D, and the grounding conductor of each emergency detector is connected with the grounding conductor of the alarm system 10. The telephone lines T and R are connected with the alarm system 10 by means of the connector 64. Also, the telephone number call speed is selected between 20 pps and 10 pps by means of the switch 66. Furthermore, the switch 58 is pushed to the "memory lock" position in which all the keys are in disabled electric condition in order to prevent the stored telephone numbers or the recorded aural information from being erased by an inadvertent actuation of the keyboard 12.

## Operation:

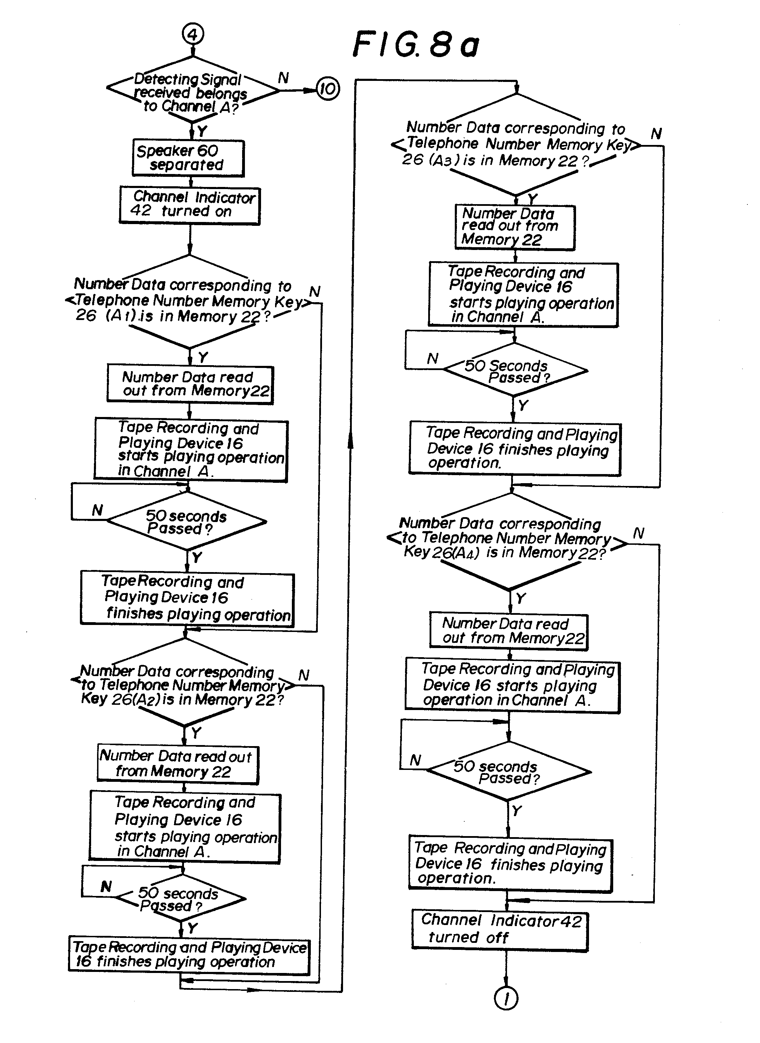

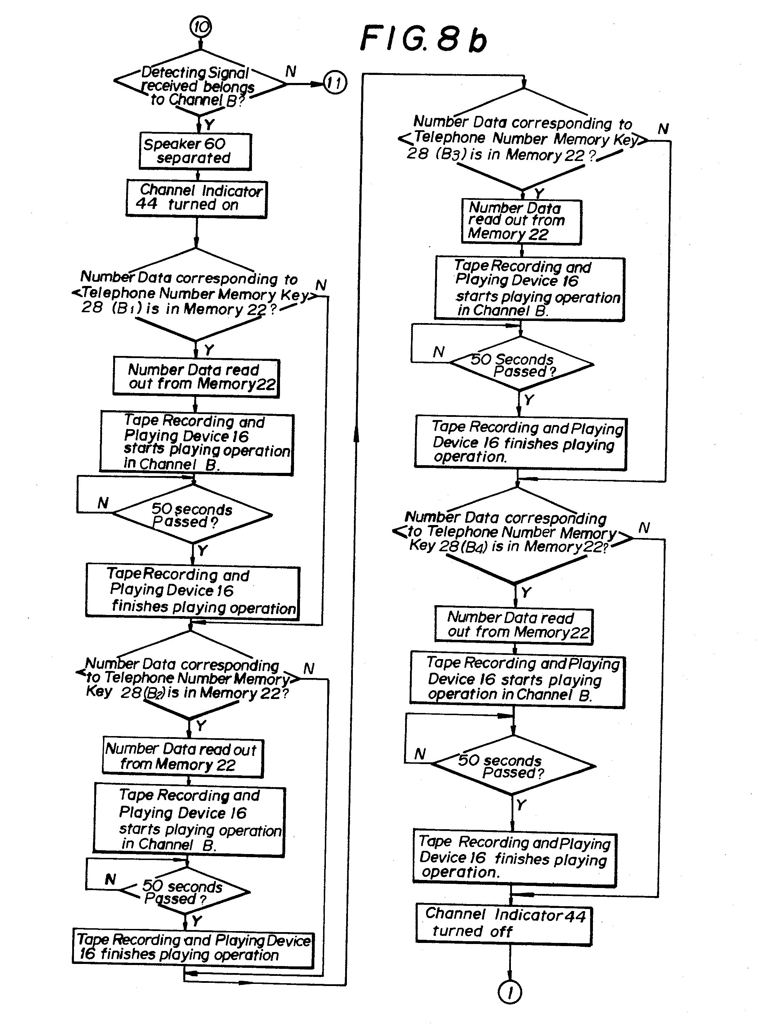

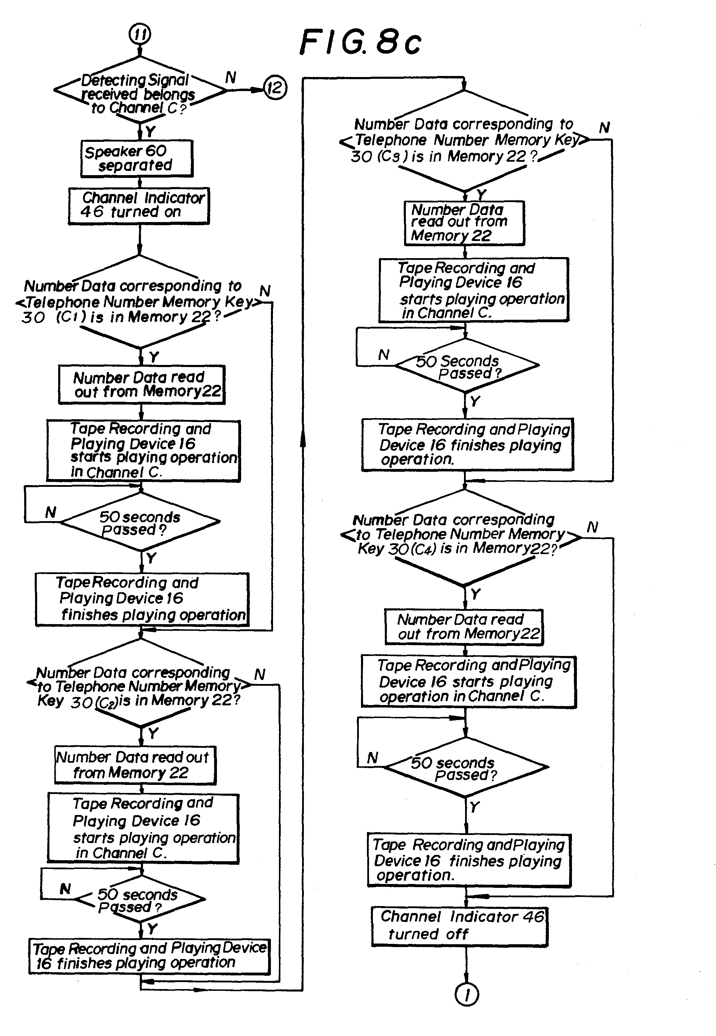

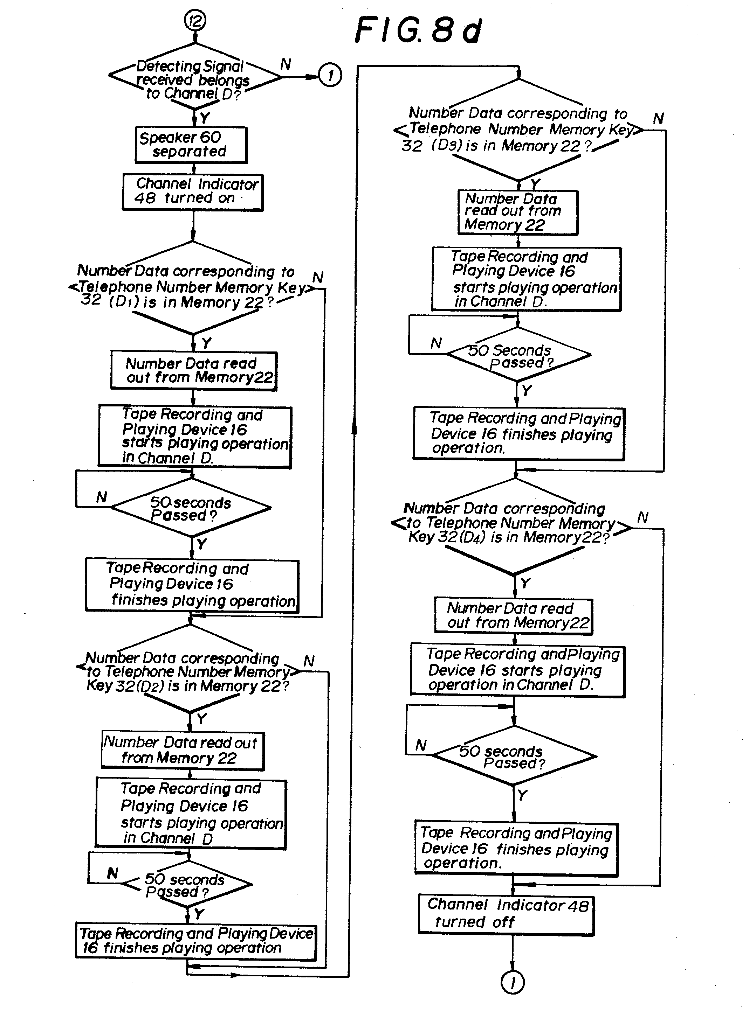

If the smoke detector, heat detector, gas leakage detector or electric leakage detector is activated (after the above-mentioned preparations have been made), the CPU 76 will behve in accordance with the program of Fig. 8 and call signals for a telephone number corresponding to the detecting signal received and aural information corresponding to said detecting signal are delivered. For example, when the smoke detector channel is activated and sends a detecting signal, the detecting signal will enter the receiver circuit 74 through the connector 62, and will be evaluated by the CPU 76 to belong to the channel A. Then, the speaker 60 will be separated from the electric circuit and the channel indicator 42 will be turned on. Confirmation will now be made as to whether a telephone number is stored in an address within the memory 22 corresponding to the telephone number memory key 26 ($A_1$). If in store, the telephone number will be read out and delivered through the control circuit 78 into the telephone lines T and R as call signals. If pause datum is stored on this address within the memory 22 together with the telephone number, "0" signal will be delivered and, after a pause, the call signals for the telephone number will be delivered. Then, the tape recording and playing device 16 will start the playing operation, and the aural information recorded in the channel A of the cassette magnetic tape 20 will be reproduced and delivered through the control circuit 78 into the telephone lines T and R. In a certain period of time (a period of time allotted to the channel A, which may be about 50 seconds) after the starting of the playing operation, the tape recording and playing device 16 will stop the playing operation. If, in the aforesaid confirmation, no telephone number is found in said address within the memory 22 corresponding to the telephone number memory 26 ($A_1$), the reading out of the telephone number and the reproduction of the aural information will be jumped over and the next confirmation procedure will be made. In particular, when the tape recording and playing device 16 finishes the playing operation, the next confirmation will be made as to whether a telephone number is stored in an address within the memory 22 corresponding to the telephone number memory key 26 ($A_2$). If stored, the telephone number will be read out and delivered into the telephone lines T and R as call signals. Then, the aforesaid aural information stored in the channel A of the cassette magnetic tape 20 will be reproduced and delivered into the telephone lines T and R again. In this way, confirmation will be made in regular sequence as to whether a telephone number is stored in each address within the memory 22 corresponding to each of the telephone number memory keys 26 ($A_1$) to ($A_4$). If a telephone number is found in the final confirmation, then after the delivery of the call signals for the telephone number and the subsequent delivery of the aural information in the channel A, the channel indicator 42 will be turned off and the CPU 76 will finish its operation.

When the heat detector (channel B) is activated and sends a detecting signal, the detecting signal will enter the receiver circuit 74 and will be judged by the CPU 76 to belong to the channel B. The speaker 60 will be separated from the electric circuit and the channel indicator 44 will be turned on. Then, confirmation will be made in regular sequence as to whether a telephone number is stored in each address within the memory 22 corresponding to each of the telephone number memory keys 28 ($B_1$) to ($B_4$) in the channel B. If the telephone number is stored, call signals will be delivered and the aural information recorded in the channel B of the cassette magnetic tape 20 will be delivered. After that, the channel indicator 44 will be turned off.

When a gas leakage detector (channel C) is activated and sends a detecting signal, the detecting signal will enter the receiver circuit 74 and will be judged by the CPU 76 to belong to the channel C. In the same way as mentioned above, call signals for the telephone number stored in each address within the memory 22 corresponding to each of the telephone number memory keys 30 $(C_1)$ to $(C_4)$ in the channel C are delivered in regular sequence, and the aural information recorded in the channel C of the cassette magnetic tape 20 is delivered each time.

When the electric leakage detector (pertaining to channel D) is activated and sends a detecting signal, the detecting signal will enter the receiver circuit 74 and will be judged by the CPU 76 to belong to the channel D. Then, call signals for telephone number stored in each address within the memory 22 corresponding to each of the telephone number memory keys 32 $(D_1)$ to $(D_4)$ in the channel D are delivered in regular sequence, and the aural information recorded in the channel D of the cassette magnetic tape 20 is delivered each time.

If, for example, the alarm system 10 receives a detecting signal from the heat detector when the calling of a telephone number or the delivery of the aural information in the channel A is in progress on the basis of a detecting signal from the smoke detector, then the calling of each telephone number and the delivery of the aural information in the channel B will be performed after the calling of all the telephone numbers and the delivery of the aural information in the channel A, are completed.

The alarm system 10 is installed, for example, in a building in which there are no persons at night. If the smoke detector, heat detector, gas leakage detector or electric leakage detector operate at night, the alarm system 10 will automatically dial each of the telephone numbers stored in the memory 22 corresponding to the detector and automatically send the aural information recorded in the cassette magnetic tape 20. The aural information may be a message that the emergency detector has been activated. The telephone numbers to be automatically dialed may be, for example, those of the private residences, etc. of the superintendents or other persons in charge of the building, or the telephone number of a company guarding the building by contract. Such persons who have received information by telephone from the alarm system 10 can thus take proper steps at the initial stage of the emergency. Since the alarm system 10 automatically dials a plurality of telephone numbers in sequence, there is a strong possibility of the aural information or message being received even when some of the aforesaid persons do not answer the telephone. Therefore, it is possible to prevent a serious accident by taking a proper step at the initial stage of the emergency.

Thus, the alarm system 10 may deliver the aural information after the call signals no matter whether the telephone is answered. Or, the alarm system 10 may deliver the aural information soon after confirming that the telephone is answered. Alternatively, if the telephone remains unanswered for a certain period of time, the alarm system 10 may dial the next telephone number without delivering the aural information.

Obviously many modifications and variations of the present invention are possible in the light of the above teachings. It is therefore to be understood that within the scope of the appended claims the invention may be practiced otherwise than as specifically described.

0096886

Wagner Shokai Inc.
14-4, Yanagibashi 2-chome
Taito-ku, Tokyo, Japan

Patent Claims

1. An alarm system associated with at least one emergency detector, <u>characterized by</u> means (64, 78) for automatically sending, when said emergency detector is activated, aural information about the activation of said emergency detector to at least one to predetermined telephone.

2. An alarm system associated with at least one emergency detector, characterized by means (22, 76, 84, 78, 64) connectable to at least one telephone for dialing one predetermined telephone number when said emergency detector has been activated, and means (16, 76, 84, 78, 64) for sending aural information about the activation of said emergency detector.

3. The alarm system as claimed in claim 2, characterized in that said dialing means (22, 76) is adapted to deliver call signals for a plurality of predetermined telephone numbers in regular sequence and at certain time intervals, and said means (16, 76, 84, 78, 64) for sending aural information is adapted to send said aural information repeatedly at said time intervals.

4. The alarm system as claimed any one of claims 1 to 3, characterized in that said means (16, 76, 84, 78, 64) for sending aural information has magnetic tape playing means (16) for playing a magnetic tape on which said aural information is recorded in advance.

0096886

5. The alarm system as claimed in any one of claims 1 to 4, characterized in that said means (16, 76, 84, 78, 64) for sending aural information has tape recording and playing means adapted for recording (via 56) desired aural information on a magnetic tape and for reproducing said aural information recorded thereon.

6. An alarm system associated with different kinds of emergency detectors, comprising means (62, 74) for receiving a detecting signal delivered from each of said emergency detectors at the time of its activation, means (22, 76, 84, 78, 64) connectable to at last one telephone for delivering call signals selecting at least one predetermined telephone numbers corresponding to the incoming detecting signal when said receiving means has been operated, and means for sending, to said telephone, aural information about the activation of the emergency detector corresponding the to nature of the detecting signal.

7. The alarm system as claimed in claim 6, characterized in that said dialing means (22, 76) is adapted to deliver a plurality of predetermined telephone numbers in regular sequence and at certain time intervals, and said means for sending aural information is adapted to send aural information repeatedly at said time intervals.

8. The alarm system as claimed in claims 6 or 7, characterized in that said means for sending aural information has tape playing means for playing a magnetic tape on which aural information is recorded beforehand in different tracks assigned to said different emergency detectors.

9. The alarm system as claimed in any one of claims 6 to 8, characterized in that said means for sending aural information has tape recording and playing means (16) adapted for recording said aural information in different tracks of the magnetic tape according to said different emergency detectors and for reproducing said aural information recorded in each track.

10. An alarm system comprising at least one emergency detector; a memory (22); means (24) for inputting at least one telephone number in the memory; means for playing a prerecorded aural message about the activation of said emergency detector; means (76) for retrieving the telephone number from the memory and applying the same to a telephone when said emergency detector is activated; and means for sending out said aural message when the telephone is answered.

# FIG. 1

# FIG. 3

FIG. 2

# FIG. 4

# FIG. 5a

```
                    ( Start )──────────①

                        │
                        ▼
                  ╱Receiver╲      Y
                 ╱ Circuit 74 ╲──────②    (→④)
                 ╲  Received? ╱
                  ╲         ╱
                     │ N
                     ▼
                  ╱Memory Key╲    N
                 ╱  34 Input? ╲──────①
                 ╲          ╱
                     │ Y
                     ▼
              ┌──────────────┐
              │Speaker 60 emits│
              │ confirmation  │
              │ sound.        │
              └──────────────┘
                     │
                     ▼
                  ╱Record Key╲    Y
                 ╱ 38 Input? ╲──────②
                 ╲          ╱
                     │ N
                     ▼
                  ╱Test Key 40╲   Y
              ⑤─▶╱  Input?   ╲──────③
                 ╲          ╱
                     │ N
                     ▼
             ╱Telephone Number╲   N
            ╱<Memory Key 26 (A₁)╲────⑥
            ╲     Input?      ╱
                     │ Y
                     ▼
              ┌──────────────┐
              │Speaker 60 emits│
              │ confirmation  │
              │ sound.        │
              └──────────────┘
```

One of Ten Key 24 "0" to "9" Input? — N → Pause Key 36 Input? — N → Telephone Number <Memory Key 26(A₁) Input? — N → ①

Y → Speaker 60 emits confirmation sound. / Number Data stored in Memory 22

Y → Speaker 60 emits confirmation sound. / Pause Data stored in Memory 22

Y → Speaker 60 emits confirmation sound. / Number Data corresponding to the Key eliminated from Memory 22 → ①

Memory Key 34 Input? — N → (loop) — Y → ⑤

## FIG. 5b

⑥
|
Telephone Number
< Memory Key 26(A₂) > —N—⑦
Input?
|
Y
|
Speaker 60 emits
confirmation sound.
|
One of Ten Keys 24 "0" to —N— Pause Key 36 —N— Telephone Number —N—①
"9" Input? Input? < Memory Key
26(A₂) Input? >
| | |
Y Y Y
| | |
Speaker 60 emits Speaker 60 emits Speaker 60 emits
confirmation confirmation sound. confirmation sound.
sound. | |
| Pause Data Number Data corresponding
Number Data stored stored in to the Key eliminated
in Memory 22 Memory 22 from Memory 22
| |
N— Memory Key 34 ①
Input?
|
Y
|
⑤

## FIG. 5c

⑦
|
Telephone Number
< Memory Key 26(A₃) > —N—⑧
Input?
|
Y
|
Speaker 60 emits
confirmation sound.
|
One of Ten Keys 24 "0" to —N— Pause Key 36 —N— Telephone Number —N—①
"9" Input? Input? < Memory Key
26(A₃) Input? >
| | |
Y Y Y
| | |
Speaker 60 emits Speaker 60 emits Speaker 60 emits
confirmation confirmation sound. confirmation sound.
sound. | |
| Pause Data Number Data corresponding
Number Data stored stored in to the Key eliminated
in Memory 22 Memory 22 from Memory 22
| |
N— Memory Key 34 ①
Input?
|
Y
|
⑤

# FIG. 5d

# FIG. 5e

⑨

**Telephone Number < Memory Key 28(B₁) Input?** —N→

↓Y

Speaker 60 emits confirmation sound.

**One of Ten Keys 24 "0" to "9" Input?** —N→ **Pause Key 36 Input?** —N→ **Telephone Number < Memory Key 28(B₁) Input?** —N→ ①

↓Y ↓Y ↓Y

Speaker 60 emits confirmation sound. | Speaker 60 emits confirmation sound. | Speaker 60 emits confirmation sound.

Number Data stored in Memory 22 | Pause Data stored in Memory 22 | Number Data corresponding to the Key eliminated from Memory 22

↓ ↓ ①

N← **Memory Key 34 Input?**

↓Y

⑤

---

**Telephone Number < Memory Key 32(D₄) Input?** —N→ ①

↓Y

Speaker 60 emits confirmation sound.

**One of Ten Keys 24 "0" to "9" Input?** —N→ **Pause Key 36 Input?** —N→ **Telephone Number < Memory Key 32(D₄) Input?** —N→ ①

↓Y ↓Y ↓Y

Speaker 60 emits confirmation sound. | Speaker 60 emits confirmation sound. | Speaker 60 emits confirmation sound.

Number Data stored in Memory 22 | Pause Data stored in Memory 22 | Number Data corresponding to the Key eliminated from Memory 22

↓ ↓ ①

N← **Memory Key 34 Input?**

↓Y

⑤

# FIG. 6

# FIG. 7

③

Telephone Number Memory Key 26(A₁) Input? —N→
Telephone Number Memory Key 28(B₁) Input? —N→
Telephone Number Memory Key 30(C₁) Input? —N→
Telephone Number Memory Key 32(D₁) Input? —N→ ①

↓Y

| Playing Indicator 52 turned on | Playing Indicator 52 turned on | Playing Indicator 52 turned on | Playing Indicator 52 turned on |

| Tape Recording and Playing Device 16 starts playing operation in Channel A. | Tape Recording and Playing Device 16 starts playing operation in Channel B | Tape Recording and Playing Device 16 starts playing operation in Channel C | Tape Recording and Playing Device 16 starts playing operation in Channel D |

N ← 50 seconds passed?

↓Y

Speaker 60 emits intermittent sound.

Tape Recording and Playing Device 16 finishes playing operation.

Playing Indicator 52 turned off.

①

0096886

0096886

# FIG. 8a

④

Detecting Signal received belongs to Channel A?  —N→ ⑩

Y

Speaker 60 separated

Channel Indicator 42 turned on

Number Data corresponding to <Telephone Number Memory Key> 26 (A1) is in Memory 22?  —N

Y

Number Data read out from Memory 22

Tape Recording and Playing Device 16 starts playing operation in Channel A.

50 seconds Passed?  —N

Y

Tape Recording and Playing Device 16 finishes playing operation

Number Data corresponding to Telephone Number Memory Key 26(A2) is in Memory 22?  —N

Y

Number Data read out from Memory 22

Tape Recording and Playing Device 16 starts playing operation in Channel A.

50 seconds Passed?  —N

Y

Tape Recording and Playing Device 16 finishes playing operation

Number Data corresponding to Telephone Number Memory Key 26 (A3) is in Memory 22?  —N

Y

Number Data read out from Memory 22

Tape Recording and Playing Device 16 starts playing operation in Channel A.

50 Seconds Passed?  —N

Y

Tape Recording and Playing Device 16 finishes playing operation.

Number Data corresponding to Telephone Number Memory Key 26(A4) is in Memory 22?  —N

Y

Number Data read out from Memory 22

Tape Recording and Playing Device 16 starts playing operation in Channel A.

50 seconds Passed?  —N

Y

Tape Recording and Playing Device 16 finishes playing operation.

Channel Indicator 42 turned off

①

# FIG. 8 b

⑩

Detecting Signal received belongs to Channel B? ──N── ⑪

↓Y

Speaker 60 separated

Channel Indicator 44 turned on

Number Data corresponding to <Telephone Number Memory Key 28 (B₁) is in Memory 22? ──N

↓Y

Number Data read out from Memory 22

Tape Recording and Playing Device 16 starts playing operation in Channel B.

N── 50 seconds Passed?

↓Y

Tape Recording and Playing Device 16 finishes playing operation

Number Data corresponding to Telephone Number Memory Key 28 (B₂) is in Memory 22? ──N

↓Y

Number Data read out from Memory 22

Tape Recording and Playing Device 16 starts playing operation in Channel B.

N── 50 seconds Passed?

↓Y

Tape Recording and Playing Device 16 finishes playing operation

Number Data corresponding to <Telephone Number Memory Key 28 (B₃) is in Memory 22? ──N

↓Y

Number Data read out from Memory 22

Tape Recording and Playing Device 16 starts playing operation in Channel B.

N── 50 Seconds Passed?

↓Y

Tape Recording and Playing Device 16 finishes playing operation.

Number Data corresponding to Telephone Number Memory Key 28 (B₄) is in Memory 22? ──N

↓Y

Number Data read out from Memory 22

Tape Recording and Playing Device 16 starts playing operation in Channel B.

N── 50 seconds Passed?

↓Y

Tape Recording and Playing Device 16 finishes playing operation.

Channel Indicator 44 turned off

①

0096886

# FIG. 8c

⑪

**Detecting Signal received belongs to Channel C?** — N → ⑫

Y ↓

**Speaker 60 separated**

**Channel Indicator 46 turned on**

**Number Data corresponding to Telephone Number Memory Key 30 (C1) is in Memory 22?** — N →

Y ↓

**Number Data read out from Memory 22**

**Tape Recording and Playing Device 16 starts playing operation in Channel C.**

N — **50 seconds Passed?**

Y ↓

**Tape Recording and Playing Device 16 finishes playing operation**

**Number Data corresponding to Telephone Number Memory Key 30 (C2) is in Memory 22?** — N →

Y ↓

**Number Data read out from Memory 22**

**Tape Recording and Playing Device 16 starts playing operation in Channel C.**

N — **50 seconds Passed?**

Y ↓

**Tape Recording and Playing Device 16 finishes playing operation**

---

**Number Data corresponding to Telephone Number Memory Key 30 (C3) is in Memory 22?** — N →

Y ↓

**Number Data read out from Memory 22**

**Tape Recording and Playing Device 16 starts playing operation in Channel C.**

N — **50 Seconds Passed?**

Y ↓

**Tape Recording and Playing Device 16 finishes playing operation.**

**Number Data corresponding to Telephone Number Memory Key 30 (C4) is in Memory 22?** — N →

Y ↓

**Number Data read out from Memory 22**

**Tape Recording and Playing Device 16 starts playing operation in Channel C.**

N — **50 seconds Passed?**

Y ↓

**Tape Recording and Playing Device 16 finishes playing operation.**

**Channel Indicator 46 turned off**

↓

①

## FIG. 8 d

⑫

Detecting Signal received belongs to Channel D? — N → ①

Y

Speaker 60 separated

Channel Indicator 48 turned on

Number Data corresponding to Telephone Number Memory Key 32 ($D_1$) is in Memory 22? — N

Y

Number Data read out from Memory 22

Tape Recording and Playing Device 16 starts playing operation in Channel D.

N ← 50 seconds Passed?

Y

Tape Recording and Playing Device 16 finishes playing operation

Number Data corresponding to Telephone Number Memory Key 32 ($D_2$) is in Memory 22? — N

Y

Number Data read out from Memory 22

Tape Recording and Playing Device 16 starts playing operation in Channel D

N ← 50 seconds Passed?

Y

Tape Recording and Playing Device 16 finishes playing operation

Number Data corresponding to Telephone Number Memory Key 32 ($D_3$) is in Memory 22? — N

Y

Number Data read out from Memory 22

Tape Recording and Playing Device 16 starts playing operation in Channel D.

N ← 50 Seconds Passed?

Y

Tape Recording and Playing Device 16 finishes playing operation.

Number Data corresponding to Telephone Number Memory Key 32 ($D_4$) is in Memory 22? — N

Y

Number Data read out from Memory 22

Tape Recording and Playing Device 16 starts playing operation in Channel D.

N ← 50 seconds Passed?

Y

Tape Recording and Playing Device 16 finishes playing operation.

Channel Indicator 48 turned off

①

# European Patent Office

## EUROPEAN SEARCH REPORT

Application number

EP 83 10 5813

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FUNKSCHAU, no. 11, May 1982, pages 46-49, München, DE K. WAGNER: "Telefon-Notruf-Computer" * Whole document * | 1-7,10 | G 08 B 25/02 H 04 M 11/04 |
| A | FUNKSCHAU | 8,9 | |
| X | US-A-3 595 999 (COLE) * Abstract; column 3, lines 10-13 * | 1,2,4, 6,8,9 | |

---

TECHNICAL FIELDS SEARCHED (Int. Cl. ³)

H 04 M 11/04

The present search report has been drawn up for all claims

| Place of search | Date of completion of the search | Examiner |
|---|---|---|
| THE HAGUE | 08-09-1983 | MIKKELSEN C. |